# EUROPÄISCHE PATENTANMELDUNG

(11) **EP 2 600 582 A1**
(43) Veröffentlichungstag der Anmeldung: **05.06.2013**
(21) Anmeldenummer: 11191112.9
(22) Anmeldetag: 29.11.2011
(51) Int. Cl.: H04L 29/06, H04L 29/08

(54) **Verfahren zur Bereitstellung von Zertifikaten in einem automatisierungstechnischen Umfeld**

(71) Anmelder: Siemens Aktiengesellschaft, 80333 München (DE)
(72) Erfinder: Herberth, Harald, 90522 Oberasbach (DE); Holtz, Gunnar, 76133 Karlsruhe (DE)

(57) **Zusammenfassung**

Die Erfindung betrifft ein Verfahren zur Bereitstellung von Zertifikaten (26, 40) in einem automatisierungstechnischen Umfeld, wobei bei einem als Server (20) fungierenden Automatisierungsgerät (14) durch einen entfernten Client (22) Daten abgerufen werden, wobei der Client (22) eine Zugangssoftware (32) mit zumindest einer Adresse (34) des Servers (20) aufweist und wobei zur kommunikativen Verbindung mit dem Server (20) der Client (22) diese Adresse (34) abruft und die Verbindung dann hergestellt wird, wobei die Adresse (34) des Servers (20) in der Zugangssoftware (32) zusammen mit einem Fingerprint (36) zur Authentifizierung eines Zertifikats (26) des Servers (20) hinterlegt werden, wobei nach dem Aufbau einer Verbindung mit dem Server (20) unter der aus der Zugangssoftware (32) abgerufenen Adresse (34) der Server (20) an den Client (22) ein erstes Zertifikat (26) übermittelt, wobei der Client (22) das erste Zertifikat (26) mit dem in der Zugangssoftware (32) verfügbaren Fingerprint (36) authentifiziert und wobei im Falle einer erfolgreichen Authentifizierung das erste Zertifikat (26) in einen Zertifikatspeicher (30) des Clients (22) geladen wird.

## Beschreibung

Die Erfindung betrifft ein Verfahren zur Bereitstellung von Zertifikaten, Schlüsseln und dergleichen - im Folgenden zusammenfassend als Zertifikate bezeichnet - in einem automatisierungstechnischen Umfeld. Die Zusammenfassung von Begriffen wie Zertifikat und Schlüssel rechtfertigt sich, weil ein zur Sicherung einer Datenübertragung übermitteltes Zertifikat einen Schlüssel umfasst. Umgekehrt besteht systematisch kein Unterschied zwischen einer Übermittlung eines Zertifikats an einen Client einerseits und einer Übermittlung eines Schlüssels an den Client andererseits. In beiden Fällen kann das Zertifikat bzw. der Schlüssel nur dann als vertrauenswürdig eingestuft werden, wenn sichergestellt ist, dass das Zertifikat bzw. der Schlüssel auch tatsächlich von demjenigen Partner stammt, mit dem eine abgesicherte Kommunikation stattfinden soll.

Als automatisierungstechnisches Umfeld soll eine Situation gelten, bei welcher ein erster Kommunikationsteilnehmer entfernt von einem jeweiligen Automatisierungssystem angeordnet ist und ein zum Automatisierungssystem gehörender zweiter Kommunikationsteilnehmer nur oder zumindest im Wesentlichen für die Behandlung von Anfragen von dem ersten, entfernten Kommunikationsteilnehmer und eventuellen weiteren gleichartigen Kommunikationsteilnehmern vorgesehen ist. Dieser erste Kommunikationsteilnehmer oder solche erste Kommunikationsteilnehmer wird bzw. werden im Folgenden als Client(s) bezeichnet. Der zum Automatisierungssystem gehörende oder mit dem Automatisierungssystem zumindest in geeigneter Form kommunikativ verbundene zweite Kommunikationsteilnehmer fungiert in Relation zu dem oder jedem Client als sogenannter Server. Um eine sichere Kommunikation zwischen zwei derartigen Kommunikationsteilnehmern zu ermöglichen, müssen sich beide Teilnehmer mit geeignetem Schlüsselmaterial versorgen. Das Schlüsselmaterial ist vorgesehen, damit der jeweilige Client in verschlüsselter und/oder abgesicherter Form beim Server zum Beispiel Daten abrufen kann oder Daten an den Server übermitteln kann.

Im Falle von zum Beispiel X.509 Zertifikaten erfolgt dieser Schlüsselaustausch dadurch, dass der Server seinen öffentlichen Schlüssel beim Verbindungsaufbau dem Client sendet und dieser anhand einer mit dem Schlüssel verbundenen Zertifikat-Signatur überprüft, ob er darauf vertrauen kann, dass der erhaltene Schlüssel tatsächlich zu dem Server gehört. Zur Überprüfung der Signatur benötigt der Client eine große Anzahl von vorinstallierten Zertifikaten von vertrauenswürdigen Zertifizierungsstellen. Diese liegen in Form eines CA Zertifikats vor, wobei CA für "certificate authority" oder Zertifizierungsstelle steht.

In vielen Fällen sind solche Zertifikate nicht durch eine öffentliche Zertifizierungsstelle ausgestellt. Dann wird eine jeweilige private Zertifizierungsstelle verwendet und damit eine private, eigene PKI (public key infrastructure). In einer solchen Situation muss der jeweilige Schlüssel zur Überprüfung des Zertifikats im Client installiert werden.

Die Installation des Zertifikats kann sich dabei als problematisch, nämlich insbesondere als fehleranfällig und/oder als vergleichsweise leicht kompromittierbar, darstellen. Eine Möglichkeit, speziell das Risiko der Kompromittierung eines Zertifikats zu umgehen, besteht darin, einem Anwender ein Zertifikat auf einem speziellen Weg, zum Beispiel per email, zukommen zu lassen. Das Zertifikat kann dann direkt im Zertifikatspeicher des Clients installiert werden, wenn der Anwender dem Übertragungsweg vertraut und eine für den Anwender ausreichende Sicherheit besteht, dass das Zertifikat von einem Partner stammt, von dem er ein solches Zertifikat erwartet. Die Installation des Zertifikats im Zertifikatspeicher ist jedoch ein für einen ungeübten Anwender komplizierter und damit fehleranfälliger Prozess. Zudem ist zu berücksichtigen, dass sich der Anwender mit der Notwendigkeit, ein Zertifikat selbst installieren zu müssen, auch deswegen überfordert fühlen kann, weil er nicht weiß, was ein Zertifikat ist, wie er damit verfahren soll und warum ein solches Zertifikat überhaupt benötigt wird.

Eine Alternative zur Übermittlung über einen verlässlichen Übermittlungsweg besteht darin, dass der Anwender ein Zertifikat von einer zentralen Stelle lädt, zum Beispiel dem jeweiligen Server selbst oder dem Internet, und dass sodann eine automatische Installation des Zertifikats erfolgt. In diesem Fall ist es aber nicht einfach, die Authentizität des Zertifikats zu überprüfen. Dies erfolgt üblicherweise indem der Anwender einen sogenannten Fingerprint des Zertifikats überprüft, wobei er einen erwarteten Wert für den Fingerprint erneut über einen anderen Kanal (email, Telefon, usw.) erhalten kann.

Alle diese Möglichkeiten sind für einen ungeübten Anwender nicht einfach zu handhaben und bei falscher Anwendung entsteht im Gegensatz zu der eigentlich beabsichtigten Absicherung der Kommunikation zwischen Client und Server eine extrem unsichere Situation.

Eine Aufgabe der Erfindung besteht entsprechend darin, ein Verfahren anzugeben, das den Austausch von Daten für einen Aufbau einer sicheren Client-Server-Kommunikation vereinfacht.

Diese Aufgabe wird erfindungsgemäß mit den Merkmalen des Anspruchs 1 gelöst. Dazu ist bei einem Verfahren zur Bereitstellung von Zertifikaten in einem automatisierungstechnischen Umfeld, wobei bei einem zu einem Automatisierungssystem gehörenden und als Server fungierenden Automatisierungsgerät oder dergleichen durch einen von Automatisierungssystem entfernten Client Daten abgerufen werden, wobei der Client eine Zugangssoftware mit zumindest einer Adresse des Servers aufweist und wobei zur kommunikativen Verbindung mit dem Server der Client diese Adresse abruft und die Verbindung dann hergestellt wird, Folgendes vorgesehen: Die Adresse des Servers wird in der Zugangssoftware des Clients zusammen mit einem Fingerprint zur Authentifizierung eines Zertifikats des Servers insbesondere im Zusammenhang mit einer Erstellung einer Automatisierungslösung für das Automatisierungssystem hinterlegt. Nach dem Aufbau einer Verbindung mit dem Server unter der aus der Zugangssoftware abgerufenen Adresse übermittelt der Server an den Client ein erstes Zertifikat. Das erste Zertifikat wird auf Seiten des Clients anhand des in der Zugangssoftware verfügbaren Fingerprints authentifiziert. Abschließend wird im Falle einer erfolgreichen Authentifizierung das erste Zertifikat in einen Zertifikatspeicher des Clients geladen und steht dort zur Authentifizierung von weiteren Zertifikaten und/oder Schlüsseln oder dergleichen zur Verfügung, die mit dem auf diese Weise heruntergeladenen und authentifizierten ersten Zertifikat signiert sind.

Wenn hier und im Folgenden von einer Adresse oder einem Fingerprint "in" der Zugriffssoftware gesprochen wird, meint dies alle üblichen Speicherorte von Daten. Adresse und/oder Fingerprint können also zum Beispiel zusammen mit der Zugriffssoftware in den Hauptspeicher des jeweiligen Geräts geladen sein oder Adresse und/oder Fingerprint können sich an einem vom Speicherort der Zugriffssoftware unabhängigen Speicherort befinden und die Zugriffssoftware hat zumindest Zugriff auf den jeweiligen Speicherort.

Der Vorteil der Erfindung besteht darin, dass die Adresse des Servers, speziell aber auch der sogenannte Fingerprint des vom Server verwendeten ersten Zertifikats, speziell im Zusammenhang mit einer Erstellung einer Automatisierungslösung für das Automatisierungssystem oder zu einem sonst geeigneten Zeitpunkt, also zum Beispiel bei einem Serviceeinsatz am Ort des Automatisierungssystems, in der Zugriffssoftware des Clients hinterlegt wird. Die Bereitstellung von Adresse und/oder Fingerprint kann also durch geschultes Personal erfolgen und der Anwender wird mit Begriffen wie Zertifikat, Schlüssel oder Fingerprint gar nicht erst konfrontiert. Dadurch, dass zur Herstellung der kommunikativen Verbindung mit dem Server eine insbesondere automatisierungsgeräteherstellereigene Zugangssoftware verwendet wird, kann diese so ausgelegt werden, dass genau die dort zusammengefassten oder im Zugriff befindlichen Daten für die Herstellung der kommunikativen Verbindung verwendet werden. Wenn nach der Herstellung der kommunikativen Verbindung der Server das erste Zertifikat sendet und die Zugangssoftware den Erhalt eines Zertifikats erkennt, kann unmittelbar danach dessen Authentifizierung anhand des Fingerprints der Zugangssoftware erfolgen. Der Vorgang läuft also für den Anwender transparent ab, und im Einzelfall ist nicht einmal notwendig, dass der Anwender sich darüber im Klaren ist, dass Zertifikate ausgetauscht und authentifiziert werden.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin; sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Bei einer Ausführungsform des Verfahrens ist vorgesehen, dass im Falle einer erfolgreichen Authentifizierung des vom Server gesendeten ersten Zertifikats der Client zum Aufbau einer sicheren Verbindung zum Server bei diesem ein zweites Zertifikat abruft und dessen Authentizität mit dem im Zertifikatspeicher abgelegten ersten Zertifikat überprüft. Dann kann zum Beispiel für jeden Client auf Seiten des Servers ein individuelles Zertifikat erstellt werden und mit einem solchen zweiten Zertifikat und einem davon umfassten öffentlichen Schlüssel des Servers ist eine sichere Kommunikation nur zwischen genau diesem Client und genau diesem Server möglich. Bei einer weiteren oder alternativen Ausführungsform des Verfahrens ist auf Seiten des Servers und zum Zusammenwirken mit der Zugangssoftware eine Portalsoftware vorgesehen, wobei das Abrufen und das Übertragen von Zertifikaten unter Kontrolle der Zugangssoftware und der Portalsoftware erfolgt. Zugangssoftware und Portalsoftware fungieren dann als Schnittstelle zu den hierarchisch tiefer angesiedelten Diensten und Funktionalitäten des jeweiligen Kommunikationsprotokolls, nach dem die Datenübertragung abgewickelt wird, und übernehmen oder veranlassen die bestimmungsgemäße Handhabung der ausgetauschten Zertifikate und damit im Zusammenhang stehenden Daten. Der Vorteil der Erfindung und ihrer Ausgestaltungen besteht damit insbesondere darin, dass eine Kopie der jeweiligen Zugangssoftware und deren Daten, also insbesondere Adresse und Fingerprint bestimmter Clients, auf einen anderen Rechner, zum Beispiel ein anderes Programmiergerät, vorgenommen werden kann, ohne dass es auf Seiten des anderen Programmiergeräts weiterer Einstellungen bedarf. Bei einem Ersteller von Automatisierungslösungen kann also die Möglichkeit zum abgesicherten Zugriff auf ein entferntes Automatisierungssystem zum Beispiel zur Fernwartung oder dergleichen relativ leicht von einem Gerät auf ein anderes Gerät übertragen werden. Der Benutzer des Programmiergeräts, also sowohl ein Benutzer eines "ersten" Programmiergeräts als auch Benutzer weiterer Programmiergeräte mit solchen Kopien, wird mit dem Austausch der Zertifikate nie konfrontiert und die Installation der Zertifikate läuft für den Benutzer vollständig transparent ab. Allenfalls wird dem Benutzer bei einer automatisch unterstützten Authentifizierung des ersten Zertifikats der Fingerprint zur Bestätigung angezeigt.

Die oben genannte Aufgabe wird auch mit einem Automatisierungsgerät zur Steuerung und/oder Überwachung eines technischen Prozesses und einem Programmiergerät zur Programmierung solcher Automatisierungsgeräte gelöst, die nach dem Verfahren wie hier und im Folgenden beschrieben arbeiten und dazu Mittel zur Durchführung des Verfahrens umfassen. Die Erfindung ist dabei in Software implementiert. Die Erfindung ist damit einerseits auch ein Computerprogramm mit durch einen Computer ausführbaren Programmcodeanweisungen und andererseits ein Speichermedium mit einem derartigen Computerprogramm sowie schließlich auch ein Automatisierungs- oder Programmiergerät, in dessen Speicher als Mittel zur Durchführung des Verfahrens und seiner Ausgestaltungen ein solches Computerprogramm geladen oder ladbar ist. Soweit das als Client fungierende Gerät, also zum Beispiel ein Programmiergerät, betroffen ist, ist dieses Computerprogramm die oben beschriebene Zugangssoftware. Soweit das als Server fungierende Gerät, also zum Beispiel ein vom Automatisierungssystem umfasstes Automatisierungsgerät, betroffen ist, ist dieses Computerprogramm die oben beschriebene Portalsoftware.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen. Das oder jedes Ausführungsbeispiel ist nicht als Einschränkung der Erfindung zu verstehen. Vielmehr sind im Rahmen der vorliegenden Offenbarung zahlreiche Abänderungen und Modifikationen möglich, insbesondere solche Varianten und Kombinationen, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

Es zeigen
- FIG 1: ein Automatisierungssystem, von dem eine kommunikative Verbindung zum Abruf von Daten von einem entfernten Server hergestellt ist,
- FIG 2: weitere Einzelheiten der bei der kommunikativen Verbindung als Client und Server fungierenden Geräte und der zur Einrichtung einer sicheren kommunikativen Verbindung ausgetauschten Daten und
- FIG 3: eine schematisch vereinfachte Darstellung des Verfahrens anhand eines Flussdiagramms.

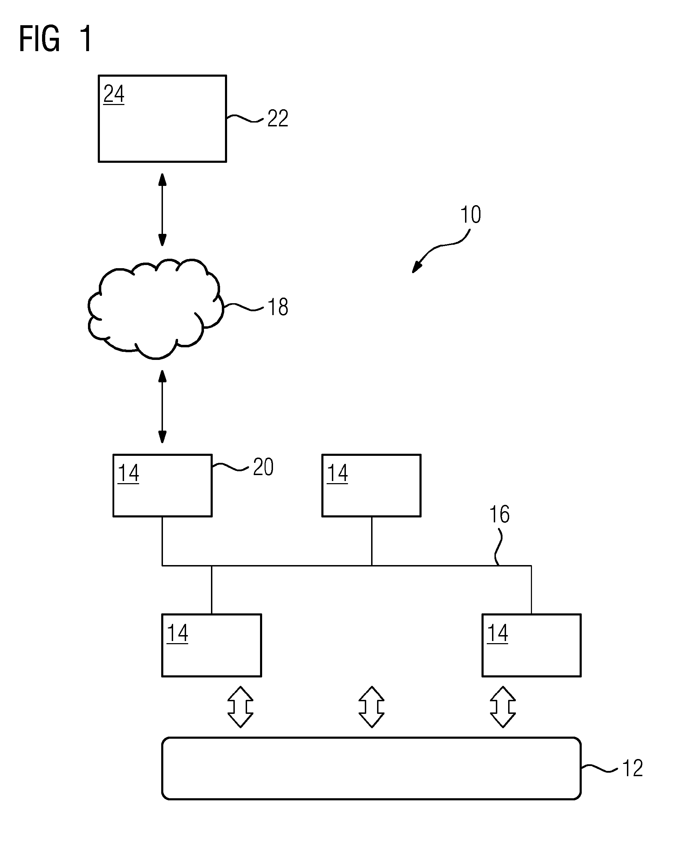

FIG 1 zeigt schematisch vereinfacht ein Automatisierungssystem 10 zur Steuerung und/oder Überwachung eines nicht näher dargestellten technischen Prozesses 12. Das Automatisierungssystem 10 umfasst zumindest ein Automatisierungsgerät 14. Bei einer Mehrzahl von Automatisierungsgeräten 14, also zum Beispiel einer speicherprogrammierbaren Steuerung, einem dezentralen Peripheriegerät, einer Antriebssteuerungseinheit, usw., sind diese über einen Bus 16 in an sich bekannter Art und Weise kommunikativ verbunden.

Das Automatisierungssystem 10 umfasst zumindest ein Automatisierungsgerät 14, das einen Anschluss an das sogenannte Internet 18 ermöglicht und zu diesem Zweck zum Beispiel eine nicht dargestellte Ethernet-Schnittstelle umfasst. Für die weitere Beschreibung wird dieses Automatisierungsgerät 14 als Server 20 bezeichnet. Das Automatisierungsgerät 14 fungiert für einen entfernten Client 22 als Server 20, indem mit dem entfernten Client 22, bei dem es sich zum Beispiel um ein sogenanntes Programmiergerät 24 handelt, Zugriffe auf den Server 20 und damit auf das Automatisierungssystem 10 stattfinden. Die Verbindung von Client 22 und Server 20 schließt dabei jeweils das Internet 18 oder ein sonst geeignetes Kommunikationsnetzwerk zur Überbrückung auch großer räumlicher Distanzen ein.

Der Begriff "Automatisierungsgerät" 14 wie hier und im Folgenden verwendet umfasst sämtliche Geräte, Einrichtungen oder Systeme, also neben z.B. Steuerungen, wie speicherprogrammierbaren Steuerungen, Prozessrechnern, (Industrie-)Computern und dergleichen auch Antriebssteuerungen, Frequenzumrichter und Ähnliches, wie sie zur Steuerung, Regelung und/oder Überwachung technologischer Prozesse z.B. zum Umformen oder Transportieren von Material, Energie oder Information etc. eingesetzt werden oder einsetzbar sind, wobei insbesondere über geeignete technische Einrichtungen, wie z.B. Sensoren oder Aktoren, Energie aufgewandt oder gewandelt wird.

Das Programmiergerät 24 oder das jeweils als Client 22 verwendete Gerät weist in einem Speicher zum Beispiel eine sogenannte Entwicklungsumgebung zur Erstellung und Pflege eines oder mehrerer im Folgenden als Automatisierungslösung bezeichneter Steuerungsprogramme auf. Mit der Automatisierungslösung wird in an sich bekannter Art und Weise die Funktionalität eines jeweiligen Automatisierungssystems 10 und der davon umfassten Automatisierungsgeräte 14 für die Steuerung und/oder Überwachung des jeweiligen technischen Prozesses 12 festgelegt.

Das Programmiergerät 24 kommt auch für Wartungszwecke oder dergleichen für einen entfernten Zugriff auf ein Automatisierungssystem 10 in Betracht. Der entfernte Zugriff, also zum Beispiel über Internet 18, ist besonders sinnvoll, wenn ein Ersteller einer Automatisierungslösung den Verwender der Automatisierungslösung, also den jeweiligen Betreiber des Automatisierungssystems 10, zu einem Zeitpunkt nach der Inbetriebnahme des Automatisierungssystems 10 unterstützen will, ohne dafür an den Ort des Automatisierungssystems 10 zu reisen.

Im Folgenden wird ohne Verzicht auf eine weitergehende Allgemeingültigkeit angenommen, dass die kommunikative Verbindung mit dem Server 20 ausgehend vom Programmiergerät 24 hergestellt wird und zur Bezeichnung der beiden Kommunikationsteilnehmer werden nur noch die Begriffe Client 22 und Server 20 verwendet.

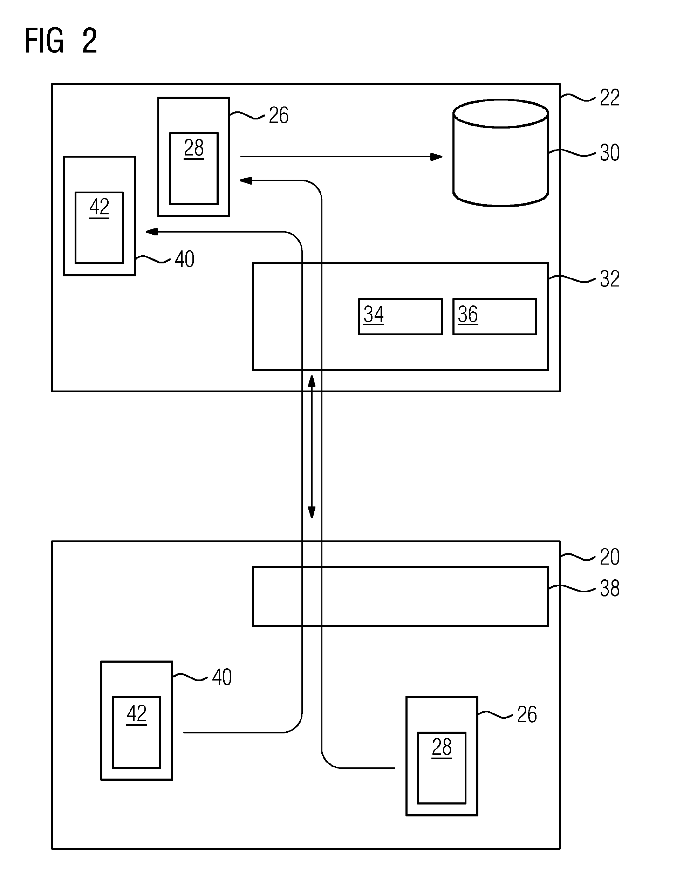

FIG 2 zeigt dazu in Form eines vereinfachten Ausschnitts aus der Darstellung in FIG 1 die beiden Kommunikationsteilnehmer mit weiteren Details. Für beide Kommunikationsteilnehmer wird vorausgesetzt, dass diese in an sich bekannter Art und Weise eine Verarbeitungseinheit in Form von oder nach Art eines Mikroprozessors und einen Speicher umfassen, wobei in den Speicher ein oder mehrere Computerprogramme geladen sind, die im Betrieb des jeweiligen Geräts durch die Verarbeitungseinheit ausgeführt werden. Auf eine graphische Darstellung von und Verarbeitungseinheit, Speicher und Computerprogramm(en) wurde verzichtet.

Gezeigt ist, dass der Server 20 über zumindest ein Zertifikat, also eine Form eines an sich bekannten Softwarezertifikats, verfügt, das im Folgenden zur Unterscheidung als erstes Zertifikat 26 bezeichnet wird. Das erste Zertifikat 26 umfasst zum Beispiel einen öffentlichen Schlüssel 28 zur sicheren Kommunikation mit dem Server 20. Wenn der Client 22 eine kommunikative Verbindung mit dem Server 20 aufbaut, kann das erste Zertifikat 26 in den Speicher des Clients 22 geladen werden, so dass der öffentliche Schlüssel 28 des Servers 20 zur Verwendung durch den Client 22 zur Verfügung steht.

Problematisch ist allerdings, dass bei einem solchen bloßen Herunterladen des ersten Zertifikats 26 nicht sichergestellt ist, ob der davon umfasste öffentliche Schlüssel 28 tatsächlich vom Server 20 stammt. Tatsächlich hätte in dem soeben skizzierten Beispiel auch der öffentliche Schlüssel 28 des Servers 20 direkt heruntergeladen werden können. Die Vertrauenswürdigkeit des öffentlichen Schlüssels 28 würde in beiden Fällen nicht verlässlich bewertet werden können.

Für eine solche Bewertung ist in an sich bekannter Art und Weise die Authentifizierung des ersten Zertifikats 26 notwendig. Normalerweise hat ein Client 22 dafür Zugriff auf ein oder mehrere sogenannte CA Zertifikate (nicht dargestellt), die in einem Zertifikatspeicher 30 vorgehalten werden. Ein solches CA Zertifikat (CA = certificate authority) wird in an sich bekannter Art und Weise von einer übergeordneten Stelle herausgegeben und ein Verwender eines solchen CA Zertifikats kann dieses benutzen, um seinen öffentlichen Schlüssel 28 zu signieren, wobei durch die Kombination von öffentlichem Schlüssel 28 und der jeweiligen Signatur der hier als erstes Zertifikat 26 bezeichnete Datensatz entsteht. Wenn das CA Zertifikat auch dem Benutzer des Clients 22 entweder zum Abruf bei der übergeordneten Stelle oder bereits in dessen Zertifikatspeicher 30 zur Verfügung steht, kann das vom Server 20 erhaltene erste Zertifikat 26 mit dem CA Zertifikat auf Authentizität geprüft werden (Authentifizierung). Wenn das Ergebnis einer solchen Authentizitätsprüfung positiv ist, ist sichergestellt, dass das erste Zertifikat 26 und damit der davon umfasste öffentliche Schlüssel 28 tatsächlich vom Server 20, nämlich dem Server 20, mit dem eine kommunikative Verbindung beabsichtigt ist, stammt.

Allerdings ist das Hinzufügen eines CA Zertifikats zum Zertifikatspeicher 30 nicht trivial und vor allem für ungeübte Benutzer nicht leicht zu handhaben und damit für solche ungeübte Benutzer aufwändig und zudem fehleranfällig.

Daher wird gemäß dem hier zu beschreibenden Verfahren ein für einen Benutzer einfacherer Weg vorgeschlagen. Danach erfolgt der Verbindungsaufbau des Clients 22 mit dem Server 20 über eine vom Hersteller des jeweils als Server 20 fungierenden Automatisierungsgeräts 14 vorgesehene Zugangssoftware 32 auf Seiten des Clients 22. Die Zugangssoftware 32 kann diverse Daten umfassen oder Zugriff auf solche Daten ermöglichen, die zum Kontakt mit dem Server 20 oder eventuellen weiteren Servern vorgesehen sind, zum Beispiel Telefonnummern. Für das hier zu beschreibende Verfahren ist zusätzlich vorgesehen, dass die Zugangssoftware 32 eine Adresse 34 des jeweiligen Servers 20, zum Beispiel dessen Internet-Adresse oder auch eine Telefonnummer, unter der mit dem Server 20 eine peer-topeer Verbindung aufgebaut werden kann, umfasst oder Zugriff auf eine solche Adresse 34 hat.

Die Adresse 34 wird in der Zugangssoftware 32 zum Beispiel im Zusammenhang mit der Erstellung der jeweiligen Automatisierungslösung hinterlegt. Zusätzlich wird - zum Beispiel bei der gleichen Gelegenheit - von der gleichen Person oder einem ähnlich versierten Fachmann ein sogenannter Fingerprint 36 für die Authentifizierung des ersten Zertifikats 26 in der Zugangssoftware 32 oder mit Zugriffsmöglichkeit durch die Zugangssoftware 32 hinterlegt.

Beim späteren Herstellen einer kommunikativen Verbindung zwischen dem Client 22 und dem Server 20, wobei sich der Client 22 dann an einem vom Ort des Automatisierungssystems 10 entfernten Ort befinden kann oder die Daten aus dessen Zugangssoftware 32, also Adresse 34 und Fingerprint 36, in die Zugangssoftware 32 eines entfernten Clients 22 übertragen wurden, ist der Ablauf dann wie folgt:
Zum Aufbau einer kommunikativen Verbindung mit dem Server 20 verwendet der Client 22 die Adresse 34 der Zugangssoftware 32 und die kommunikative Verbindung wird durch die Zugangssoftware 32 mit dieser Adresse 34 hergestellt. Nach dem Aufbau einer Verbindung mit dem Server 20 unter der Adresse 34 übermittelt dieser dem Client 22 das erste Zertifikat 26. Dazu ist auf Seiten des Servers 20 eine zur Zugangssoftware 32 komplementäre Portalsoftware 38 vorgesehen. Der Umstand, dass in der Darstellung in FIG 2 eine Linie vom ersten Zertifikat 26 im Bereich des Servers 20 bis zum ersten Zertifikat 26 im Bereich des Clients 22, die das Herunterladen des ersten Zertifikats 26 vom Server 20 darstellen soll, durch die Portalsoftware 38 und die Zugangssoftware 32 verläuft, soll illustrieren, dass der Abruf und das Herunterladen des ersten Zertifikats 26 unter Kontrolle der Zugangssoftware 32 und der Portalsoftware 38 erfolgt.

Der Client 22 überprüft (authentifiziert) das erste Zertifikat 26 mit dem Fingerprint 34. Dies kann automatisch oder zumindest automatisch unterstützt erfolgen. Bei einer automatischen Authentifizierung wird ein Fingerprint des ersten Zertifikats 26 gebildet und automatisch mit dem Fingerprint 36 der Zugangssoftware 32 verglichen. Bei einer automatisch unterstützten Authentifizierung werden ein Fingerprint des ersten Zertifikats 26 und der Fingerprint 36 der Zugangssoftware 32 einem Benutzer gleichzeitig angezeigt und der Benutzer kann die Authentizität des ersten Zertifikats 26 bestätigen, wenn beide Fingerprints übereinstimmen.

Im Falle einer erfolgreichen Authentifizierung wird das erste Zertifikat 26 in den Zertifikatspeicher 30 des Clients 22 geladen. Bei einer automatisch unterstützten Authentifizierung hat der Benutzer größere Einflussmöglichkeiten und kann eventuell auch selbst bei übereinstimmenden Fingerprints die Übernahme des ersten Zertifikats 26 in den Zertifikatspeicher 30 verhindern.

Nach einer erfolgreichen Authentifizierung des ersten Zertifikats 26, aber nicht notwendig unmittelbar nach einer solchen Authentifizierung, kann der Client 22 zum Aufbau einer sicheren Verbindung mit dem Server 20 bei diesem ein zweites Zertifikat 40 mit einem davon umfassten öffentlichen Schlüssel 42 abrufen. Das zweite Zertifikat 40 ist auf Seiten des Servers 20 mit dem ersten Zertifikat 26 signiert worden. Die Authentizität dieses zweiten Zertifikats 40 und eventueller weiterer Zertifikate kann dann in an sich bekannter Art und Weise und automatisch oder automatisch unterstützt (wie oben beschrieben) mit dem jetzt im Zertifikatspeicher 30 verfügbaren ersten Zertifikat 26 überprüft (authentifiziert) werden.

Die Tatsache, dass in der Darstellung in FIG 2 auch eine Linie vom zweiten Zertifikat 40 im Bereich des Servers 20 bis zum zweiten Zertifikat 40 im Bereich des Clients 22, die analog zur Situation beim Herunterladen des ersten Zertifikats 26 das Herunterladen des zweiten Zertifikats 40 vom Server 20 darstellen soll, durch die Portalsoftware 38 und die Zugangssoftware 32 verläuft, soll veranschaulichen, dass auch der Abruf und das Herunterladen des zweiten Zertifikats 40 unter Kontrolle der Zugangssoftware 32 und der Portalsoftware 38 erfolgt.

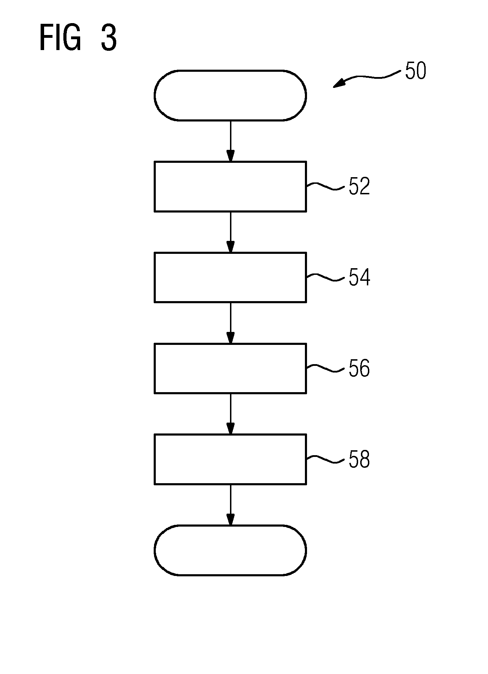

FIG 3 zeigt schematisch vereinfacht anhand eines Flussdiagramms 50 eine mögliche Form zur Implementation des Verfahrens in einem Computerprogramm, also zum Beispiel in Form der Zugangssoftware 32 (FIG 2) auf Seiten des Clients 22.

Wenn der Client 22 eine sichere Verbindung mit dem Server 20 aufbauen will, wird dieser unter der in der Zugangssoftware 32 hinterlegten Adresse 34 angesprochen (erster Funktionsblock 52). Der Server 20 liefert daraufhin das erste Zertifikat 26 zurück, das die Zugangssoftware 32 als Zertifikat erkennt (zweiter Funktionsblock 54). Die Zugangssoftware 32 authentifiziert das erste Zertifikat 26 entweder automatisch oder automatisch unterstützt (dritter Funktionsblock 56). Bei einer automatischen Authentifizierung ermittelt die Zugangssoftware 32 zu dem zweiten Zertifikat 26 dessen Fingerprint. Dieser Fingerprint kann mit dem in der Zugangssoftware 32 gespeicherten, erwarteten Fingerprint 36 automatisch verglichen werden. Bei Übereinstimmung ist das erste Zertifikat 26 authentifiziert. Bei einer erfolgreichen Authentifizierung wird das erste Zertifikat 26 des Servers 20 in den Zertifikatspeicher 30 des Clients 22 geladen (vierter Funktionsblock 58) und steht dort für eine zukünftige Verwendung, etwa zur Authentifizierung weiterer Zertifikate 40 und/oder Schlüssel 42 vom Server 20 oder von anderen Servern oder dergleichen des Betreibers des Servers 20 zur Verfügung.

Die Zugangssoftware 32 oder eine Implementation des Flussdiagramms 50 ist damit ein Beispiel für ein Mittel zur Umsetzung des Verfahrens wie hier beschrieben. Als weitere Mittel kommen in an sich bekannter Art und Weise eine Verarbeitungseinheit in Form von oder nach Art eines Mikroprozessors hinzu, der die Zugangssoftware 32 ausführt sowie ein Speicher, in den die Zugangssoftware 32 geladen oder ladbar ist.

Einzelne im Vordergrund stehende Aspekte der hier eingereichten Beschreibung lassen sich damit kurz wie folgt zusammenfassen: Es wird ein Verfahren zur Bereitstellung von Zertifikaten 26, 40 in einem automatisierungstechnischen Umfeld angegeben, wobei bei einem zu einem Automatisierungssystem 10 gehörenden und als Server 20 fungierenden Automatisierungsgerät 14 durch einen von Automatisierungssystem 10 entfernten Client 22 Daten abgerufen werden, wobei der Client 22 eine Zugangssoftware 32 mit zumindest einer Adresse 34 des Servers 20 aufweist und wobei zur kommunikativen Verbindung mit dem Server 20 der Client 22 diese Adresse 34 abruft und die Verbindung dann hergestellt wird. Die Adresse 34 des Servers 20 wird in der Zugangssoftware 32 zusammen mit einem Fingerprint 36 zur Authentifizierung eines Zertifikats 26 des Servers 20 zum Beispiel im Zusammenhang mit einer Erstellung einer Automatisierungslösung für das Automatisierungssystem 10 hinterlegt. Zum eigentlichen Austausch des Zertifikats zwischen Server 20 und Client 22 umfasst das Verfahren sodann noch die folgenden Schritte: Nach dem Aufbau einer Verbindung mit dem Server 20 unter der aus der Zugangssoftware 32 abgerufenen Adresse 34 übermittelt der Server 20 an den Client 22 ein erstes Zertifikat 26. Der Client 22 überprüft das erste Zertifikat 26 mit dem in der Zugangssoftware 32 verfügbaren Fingerprint 36 und authentifiziert dieses im Falle einer erfolgreichen Prüfung. Im Falle einer erfolgreichen Authentifizierung wird das erste Zertifikat 26 in einen Zertifikatspeicher 30 des Clients 22 geladen und steht dort für zukünftige Verwendungen zur Verfügung.

## Patentansprüche

1. Verfahren zur Bereitstellung von Zertifikaten (26, 40) in einem automatisierungstechnischen Umfeld,
wobei bei einem zu einem Automatisierungssystem (10) gehörenden und als Server (20) fungierenden Automatisierungsgerät (14) durch einen von Automatisierungssystem (10) entfernten Client (22) Daten abgerufen werden,
wobei der Client (22) eine Zugangssoftware (32) mit zumindest einer Adresse (34) des Servers (20) aufweist und
wobei zur kommunikativen Verbindung mit dem Server (20) der Client (22) diese Adresse (34) abruft und die Verbindung dann hergestellt wird,
wobei die Adresse (34) des Servers (20) in der Zugangssoftware (32) zusammen mit einem Fingerprint (36) zur Authentifizierung eines Zertifikats (26) des Servers (20) hinterlegt werden,
wobei nach dem Aufbau einer Verbindung mit dem Server (20) unter der aus der Zugangssoftware (32) abgerufenen Adresse (34) der Server (20) an den Client (22) ein erstes Zertifikat (26) übermittelt,
wobei der Client (22) das erste Zertifikat (26) mit dem in der Zugangssoftware (32) verfügbaren Fingerprint (36) authentifiziert und
wobei im Falle einer erfolgreichen Authentifizierung das erste Zertifikat (26) in einen Zertifikatspeicher (30) des Clients (22) geladen wird.

2. Verfahren nach Anspruch 1, wobei im Falle einer erfolgreichen Authentifizierung der Client (22) zum Aufbau einer sicheren Verbindung zum Server (20) bei diesem ein zweites Zertifikat (40) abruft und dessen Authentizität mit dem im Zertifikatspeicher (30) abgelegten ersten Zertifikat (26) überprüft.

3. Verfahren nach einem der Ansprüche 1 oder 2, wobei zum Zusammenwirken mit der Zugangssoftware (32) auf Seiten des Servers (20) eine Portalsoftware (38) vorgesehen ist und wobei das Abrufen und das Übertragen von Zertifikaten (26, 40) unter Kontrolle der Zugangssoftware (32) und der Portalsoftware (38) erfolgt.

4. Computerprogramm mit Programmcodemitteln, um alle Schritte von jedem beliebigen der Ansprüche 1 bis 3 durchzuführen, wenn das Programm auf einem Programmiergerät (24) zum Erstellen oder Warten einer Automatisierungslösung für ein Automatisierungssystems (10) ausgeführt wird.

5. Programmiergerät (24) mit einer Verarbeitungseinheit und einem Speicher, in den als Computerprogramm nach Anspruch 4 eine Zugangssoftware (32) mit einer Adresse (34) eines Servers (20) und einem Fingerprint (36) eines auf dem Server (20) vorgehaltenen Zertifikats (26) geladen ist, das im Betrieb des Gerätes durch die Verarbeitungseinheit ausgeführt wird.
